# EUROPEAN PATENT SPECIFICATION

(11) **EP 1 690 667 B1**
(45) Date of publication and mention of the grant of the patent: **30.12.2009**
(21) Application number: 04818945.0
(22) Date of filing: 18.11.2004
(51) Int. Cl.: B29D 30/30

(54) **TRANSFERRING DEVICE FOR SHEET MEMBER**
ÜBERTRAGUNGSVORRICHTUNG FÜR FLÄCHENGEBILDE
DISPOSITIF DE TRANSFERT POUR ELEMENT FEUILLE

(30) Priority: 20.11.2003 JP 2003390215
(43) Date of publication of application: 16.08.2006
(73) Proprietor: Bridgestone Corporation, Tokyo 104-8340 (JP)
(72) Inventor: YOSHII, Kiyotaka c/o Bridgestone Corporation,, Kodaira-shi, Tokyo 1878531 (JP)
(74) Representative: Whalley, Kevin
(86) International application number: PCT/JP2004/017150
(87) International publication number: WO 2005/049305

(56) References cited:
- WO-A1-02/102579
- JP-A- 61 167 538
- JP-A- 2001 315 219
- JP-A- 2002 234 081
- JP-A- 2003 291 225

## Description

The present invention relates to a sheet member transfer device.

A conventional sheet member transfer device is disclosed, for example, in Patent Document 1 which is identified below.
- Patent Document 1: JP-2001-315219A

This known sheet member transfer device includes a transfer drum having an outer peripheral surface for bearing a sheet member thereon, and a tire-building drum onto which the sheet member is transferred from the transfer drum with the tire-building drum urged against the transfer drum and rotated in opposite direction with reference to the transfer drum. In this instance, the transfer drum is formed with a hollow chamber that is connected to a suction device, and a plurality of suction holes in its outer peripheral surface, which are in communication with the hollow chamber.

With this type of sheet member transfer device, while applying a suction force of the suction device to the hollow chamber, a sheet member is fed to the transfer drum and attracted to the suction holes so as to be applied to the transfer drum. Subsequently, the transfer drum is urged against the tire-building drum and the operation of the suction device is stopped. The transfer drum and the tire-building drum are then rotated in the opposite directions in order to transfer the sheet member from the transfer drum to the tire-building drum.

However, with such an arrangement of the conventional sheet member transfer device, since the sheet member is held on the transfer drum by an attraction force generated by vacuum, there has been such a problem that the sheet member is sucked into the suction holes thereby causing a number of suction traces over a wide surface region of the sheet member. Moreover, in order to positively hold the sheet member on the transfer drum, it is necessary to ensure that the surface area in which the suction holes are arranged is smaller than the sheet member in order to avoid suction of ambient air from the suction holes while the sheet member is being held. However, such an arrangement would not allow the sheet member to be sucked along the outer edges (inclusive of the leading end), giving rise to a further problem that the outer edge portion of the sheet member, which is being held on the transfer drum, is separated from the transfer drum and thereby deformed. Attention is also drawn to one disclosures of JP-2003-291225A, JP-61-167538A, and JP-2002-234081A,

It is therefore an object of the present invention to provide an improved sheet member transfer device, which allows the transfer of the sheet member to be performed easily and positively, while preventing its deformation.

The present invention in its first aspect resides in a sheet member transfer device for forming a cylindrical tire constitutive member by joining a leading end and a trailing end of a sheet member with each other, wherein the sheet member is formed by successively joining side edges of a plurality of narrow strip members with each other, said strip members having a constant width, said sheet member transfer device comprising:
a transfer drum for forming the sheet member by applying said plurality of strip members onto an outer peripheral surface of the transfer drum so that the width direction of each strip member is oriented in the circumferential direction of the transfer drum, and a receiver drum for forming the cylindrical tire constitutive member by joining the leading end and the trailing end of the sheet member which has been transferred from the transfer drum, with said transfer drum urged against the receiver drum and said receiver drum rotated in an opposite direction to the transfer drum;
said transfer drum being provided, on its outer peripheral surface, with a leading end application region for applying a strip member forming said leading end of the sheet member, and a plurality of application regions following said leading end application region and arranged in the circumferential direction of the transfer drum at a pitch which corresponds to the width of the strip member, said application regions being divided into a plurality of low adhesion sections with a low adhesion force, and a plurality of high adhesion sections with a high adhesion force, said low adhesion sections and said high adhesion sections being alternately arranged in the width direction of the transfer drum; and radial expansion/contraction means for moving the high adhesion sections radially inwards of the low adhesion sections, said high adhesion sections and low adhesion sections being flush with each other when the narrow strip members are applied to the transfer drum, and said high adhesion sections being moved by said radial expansion/contraction means radially inwards of the low adhesion sections, when the sheet member is transferred from the transfer drum to the receiver drumi.
Preferably, said radial expansion/contraction means comprising collective expansion/ contraction means for moving radially inwards the high adhesion sections in the leading end application region and the application region adjacent thereto, respectively, and moving means for individually moving radially inwards the high adhesion sections in the remaining application regions; and said collective expansion/contraction means comprising cam followers which are pivoted to the high adhesion sections, respectively, and movable radially inwards and outwards, a rotary cam which can be rotated to move the cam followers radially inwards and outwards, and cam driving means for rotating the rotary cam in the circumferential direction of the transfer drum.

The present invention in its second aspect resides in a sheet member transfer device according to the first aspect, wherein the low adhesion sections in at least the leading end application region are comprised of resilient material.

The present invention in its third aspect resides in a sheet member transfer device according to the first or second aspect, wherein the low adhesion sections in at least the leading end application region are comprised of silicone rubber at least in outer surface regions thereof.

The present invention in its fourth aspect resides in a sheet member transfer device according to any one of the first to the third aspects, wherein the high adhesion sections in at least the leading end application region have outer surfaces in the form of mirror-finished surfaces.

The present invention in its fifth aspect resides in a sheet member transfer device according to the fourth aspect, wherein the mirror-finished surfaces are formed by plating with respect to the outer surfaces.

The present invention in its sixth aspect resides in a sheet member transfer device according to any one of the first to the fifth aspects, wherein the low adhesion sections and the high adhesion sections in at least the leading end application region are arranged alternately in the axial direction.

According to the first aspect of the present invention, upon application of the narrow strip members to the transfer drum, when the high adhesion sections are moved by the moving means to be flush with the low adhesion sections, the narrow strip members are supplied to, and urged against the corresponding adhesion sections of the transfer drum so that the narrow strip members are tightly adhered, in particular, to the high adhesion sections. Here, the high adhesion sections and the low adhesion sections are not limited to an arrangement wherein they are smaller in surface area than the narrow strip members as in the conventional suction holes. Thus, the high adhesion sections and the low adhesion sections can be made larger in surface area than the narrow strip members so as to ensure that the narrow strip members are positively held in place, over their entire regions, particularly by the adhesion force of the high adhesion sections.

Furthermore, when the sheet member is to be transferred from the transfer drum and applied to the receiver drum, first of all, the high adhesion sections are moved by the radial expansion/contraction means radially inwards of the low adhesion sections so that the sheet member is held solely by the low adhesion sections. In such a condition, with the transfer drum urged against the receiver drum, the transfer drum and the receiver drum are rotated in the opposite directions so as to transfer the sheet member from the transfer drum to the receiver drum. In this instance, since the sheet member is held solely by the low adhesion sections, the sheet member can be readily separated from the transfer drum and positively transferred onto the receiver drum. Here, while being held on the transfer drum, the sheet member is adhesively held in place particular by the high adhesion sections so as to prevent formation of suction traces over a wide surface region, as would be unavoidable in the prior art.

Moreover, according to the present invention, the radial expansion/contraction means is preferably comprised of collective expansion/ contraction means for moving radially inwards the high adhesion sections in the leading end application region and the application region adjacent thereto, respectively, and moving means for individually moving radially inwards the high adhesion sections in the remaining application regions, and the collective expansion/contraction means includes cam followers which are pivoted to the high adhesion sections, respectively, and movable radially inwards and outwards, a rotary cam which can be rotated to move the cam followers radially inwards and outwards, and cam driving means for causing the rotary cam to be rotated in the circumferential direction of the transfer drum. Therefore, the transfer device can be simplified in structure, as compared to an arrangement wherein the high adhesion sections in all the application regions are individually moved radially inwards by such moving means as cylinder devices.

According to the second aspect of the present invention, even when the distance between the transfer drum and the receiver drum is not larger than zero, the sheet member can be transferred onto the receiver drum under a resilient deformation of the low adhesion sections, thereby facilitating the adjustment of the distance between these drums.

The third and the fourth aspects of the present invention both allow the low adhesion sections to be formed easily and at low cost.

The fifth aspect of the present invention similarly allows the high adhesion sections to be formed easily and at low cost.

The sixth aspect of the present invention makes it readily possible to realize a narrow pitch of the high and the low adhesion sections.
The invention will be further described with reference to one accompanying drawings, wherein

FIG. 1 is a partially broken side view showing a first embodiment of the present invention;
FIG. 2 is a side view showing the leading end application region of the transfer drum;
FIG. 3 is a sectional view taken along the line I-I in FIG. 2;
FIG. 4 is a sectional view taken along the line II-II in FIG. 2; and
FIG. 5 is a side view showing a second embodiment of the present invention.

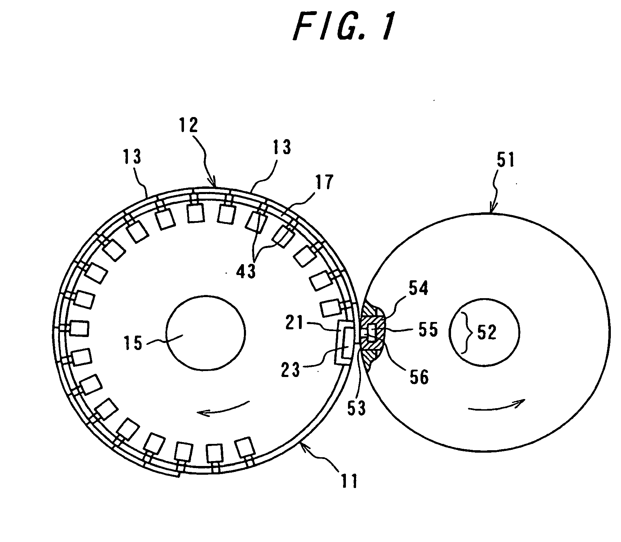

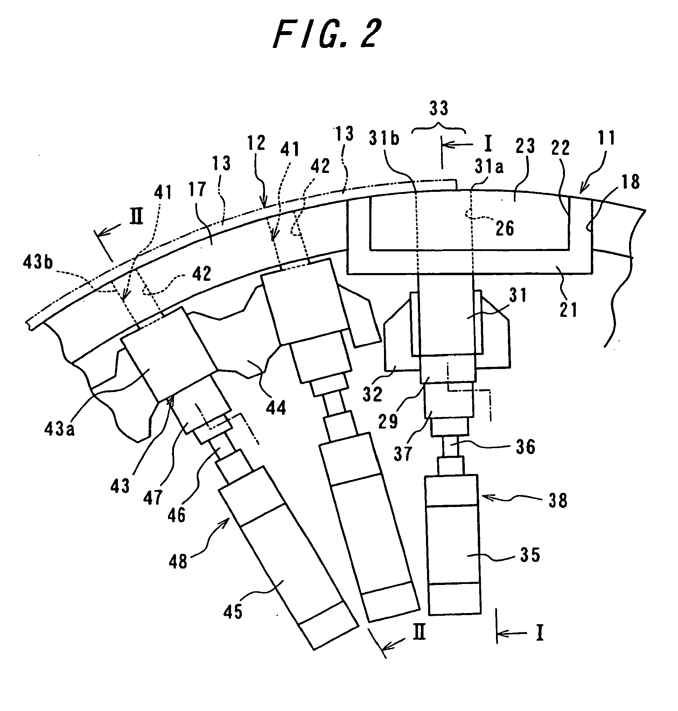

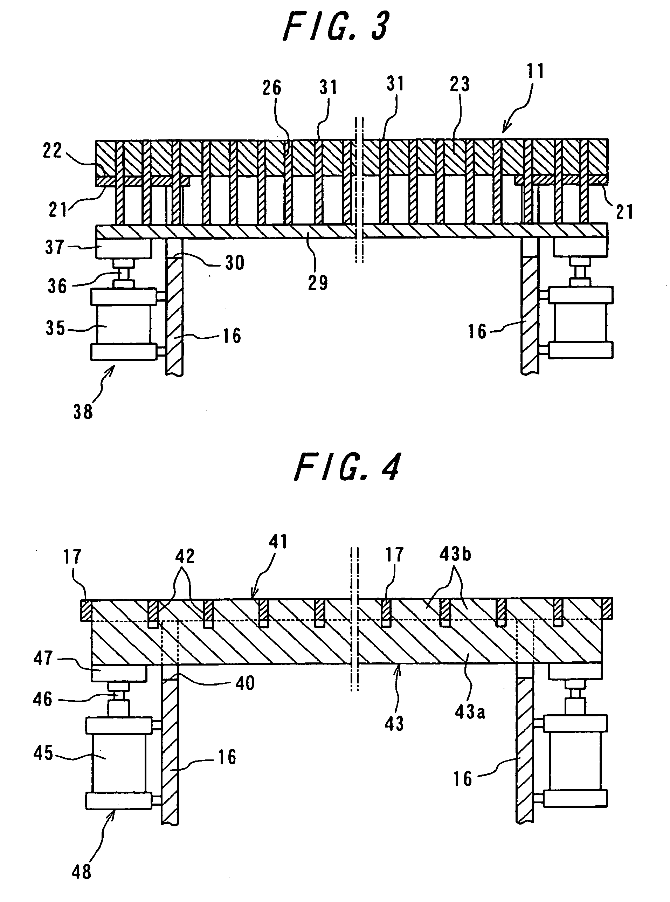

First of all, the basic concept of the present invention will be explained below with reference to the drawings. FIGS. 1 through 4 illustrate a sheet member transfer device representing the basic concept of the present invention, wherein reference numeral 11 denotes a cylindrical transfer drum which is rotatable about a horizontal axis. The transfer drum 11 has an outer peripheral surface which is applied with a sheet member 12 to be transferred to a receiver drum explained hereinafter, which may be a tire building drum, for example. The sheet member 12 has a length which is substantially the same as the peripheral length of the transfer drum 11. Here, such a sheet member 12 is formed by repeating the steps of applying a narrow strip member 13 having a small width and a predetermined length, to the outer peripheral surface of the transfer drum 11 so as to extend in the width direction thereof, rotating the transfer drum 11 by an amount which corresponds to the width of the narrow strip member 13, and then applying a subsequent narrow strip member 13 to the outer peripheral surface of the transfer drum 11 so as to extend in the width direction thereof, with its side edge in tight contact with the corresponding side edge of the previous narrow strip member 13.

Such application of the narrow strip members 13 is performed multiple times, the number of which corresponds to that for the nominal rim diameter of the pneumatic tire to be produced, e.g. 17 times when the nominal rim diameter is 44 cm (17 inches). In this way, when the sheet member 12 has been formed on the peripheral surface of the transfer drum 11, the transfer drum 11 is moved in a translation manner toward the receiver drum and then urged against the receiver drum and rotated so as to transfer the sheet member 12 from the transfer drum 11 to the receiver drum. On the receiver drum, the leading end and the trailing end of the sheet member 12 are joined to each other so that the sheet member 12 now assumes a cylindrical shape.

When the sheet member 12 is made of a plurality of narrow strip members 13, the number of which corresponds to the number of the nominal rim diameter, it is possible readily to prepare different pneumatic tires corresponding to different rim diameters, e.g. 38 cm (15 inches) to 51 cm (20 inches), by using the same transfer drum 11 and transferring different sheet members 12 to receiver drums of different diameters. Here, the sheet member 12 may be an inner liner consisting of unvulcanized rubber, a carcass ply consisting of unvulcanized rubber and reinforcement cords embedded therein, etc.

The transfer drum 11 comprises a main shaft 15 arranged on a rotational axis, support discs 16 fixedly secured to a proximal end and a distal end of the main shaft 15 coaxially thereto, and an outer cylinder 17 having an inner periphery that is fixedly secured to the radially outer edges of the support discs 16, coaxially to the main shaft 15. The outer cylinder 17 has an open slit 18 which is formed at a single peripheral location, to extend from one end to the other end of the outer cylinder in the axial direction. The location of the slit 18 is the location where the narrow strip member 13 forming the leading end of the sheet member 12 is applied.

Reference numeral 21 denotes support blocks fixedly secured the radially outer edges of the support discs 16, respectively. Each support block 21 is accommodated in the slit 18 so as to cover the slit 18, and has an outer periphery formed with a recess 22 of substantially rectangular cross-section, which extends in the axial direction. Reference numeral 23 denotes interpolating bars arranged in the recess 22, each having both ends fixedly secured to the walls of the recess 22 so that the interpolating bar 23 is supported by the support block 21 to extend in the axial direction. The interpolating bar 23 has an outer edge of arcuate shape, which is flush with the outer periphery of the outer cylinder 17. The interpolating bar 23 fills the slit 18 in the outer cylinder 17 so that the outer periphery of the outer cylinder 17 is continuously cylindrical.

The interpolating bars 23 are each made of a resilient material which exhibit a low adhesion to unvulcanized rubber and which can be readily deformed elastically; to be more specific, they are made of silicone rubber.
When the interpolating bar 23 exhibits low adhesion, the sheet member 12 in tight contact with the interpolating bar 23 can be readily separated and removed from the interpolating bar 23. A plurality of through holes 26 of rectangular cross-section are formed at the middle portion of the interpolating bar 23, as seen in the circumferential direction, so as to extend in the radial direction. These through holes 26 are aligned in the axial direction and spaced from each other by a constant distance.

Support bars 29 are arranged on the radially inner side of the interpolating bars 23, to extend in parallel therewith. Each support bar 29 has both ends extending through radial slits 30 which are formed in the support discs 16. Reference numeral 31 denotes a plurality of retainer plates, the number of which corresponds to the number of the through holes 26. Each retainer plate 31 has a radially outer end portion that is inserted into the associated through hole 26, and a radially outer surface which is flush with the outer peripheral surface of the outer cylinder 17 and the interpolating bars 23, when the support bar 29 has been moved to its radially outermost position. The radially outer surface of the retainer plate 31 is retracted radially inwards from the interpolating bars 23 while being guided by a guide member, when the support bar 29 is moved radially inwards.

Furthermore, the radially outer surface of the retainer plate 31 is in the form of a mirror-finished surface formed by plating, such as nickel plating, chromium plating, or the like. As a result, when the sheet member 12 is urged against the radially outer surfaces of the retainer plates 31, the sheet member 12 is brought into tight adhesion with the retainer plates 31 by intensive adhesion force. Here, when the narrow strip members 13 constituting the sheet member 12 are applied to the transfer drum 11, the leading end of the sheet member 12 or the leading end of the first narrow strip member 13 is supplied to an area between one circumferential end 31a and the other circumferential end 31b of the retainer plate 31. Thus, the area between one circumferential end 31a and the other circumferential end 31b of the retainer plate 31 constitutes the leading end application region 33 of the transfer drum 11, to which the leading end of the sheet member 12 is applied.

The leading end application region 33 is divided into a plurality of low adhesion sections in the form of the interpolating bars 23, and a plurality of high adhesion sections in the form of the retainer plates 31. The low adhesion sections comprising the interpolating bars 23, which are situated between the retainer plates 31 in the leading end application region 33, exhibit a low adhesion force with respect to the sheet member 12 so that the sheet member 12 can be readily separated and removed. The high adhesion sections comprising the retainer plates 31 are arranged in the axial direction alternately with the interpolating bars 23 forming the low adhesion sections, and exhibit strong adhesion force with respect to the sheet member 12.

When the interpolating bars 23 (the low adhesion sections) and the retainer plates 31 (the high adhesion sections) are axially arranged alternately with each other in the leading end application region 33, it is readily possible to minimize the pitch of the interpolating bars 23 and the retainer plates 31 to thereby ensure that the leading end of the sheet member 12 is adhesively retained in a positive manner. When the interpolating bars 23 (the low adhesion sections) are made of resilient material, as mentioned above, even if the distance between the transfer drum 11 and the receiver drum is not larger than zero, the sheet member 12 can be transferred onto the receiver drum under a resilient deformation of the interpolating bars 23, thereby facilitating the adjustment of the distance between these drums.

Also, when the low adhesion sections (the interpolating bars 23) are entirely made of silicone rubber, it is possible to form the low adhesion sections easily and at low cost. Here, when at least the outer surface portions of the low adhesion sections are made of silicone rubber, the separation and removal of the sheet member 12 from the low adhesion sections (the interpolating bars 23) can be facilitated. Therefore, silicone rubber may be applied only with respect to the outer surface portions of the low adhesion sections. Furthermore, as mentioned above, the outer surfaces of the high adhesion sections, i.e., the radially outer surfaces of the retainer plates 31, which are formed as mirror-finished surfaces by plating, can also be formed easily and at low cost.

Reference numeral 35 denotes cylinders secured to the support discs 16 to extend in the radial direction, each having a piston rod 36 with a tip end which is connected, via an intermediate member 37, to the relevant axial end of the support bar 29. When the cylinder 35 is operated and the piston rod 36 is extended to its stroke end, the retainer plate 31 is moved radially outwards such that the radially outer surface of the retainer plate 31 is flush with the outer surfaces of the interpolating bars 23 and the transfer drum 11. On the other hand, when the piston rod 36 is retracted to its stroke end, the radially outer surface of the retainer plate 31 is retracted radially inwards from the outer surfaces of the interpolating bars 23 and the transfer drum 11. The above-mentioned cylinders 35 and the intermediate members 37 as a whole constitute the moving means 38 for moving the high adhesion sections in the form of the retainer plates 31 radially inwards from the low adhesion sections in the form of the interpolating bars 23.

Reference numeral 41 denotes a plurality of through hole groups spaced from each other in the circumferential direction by a constant distance, which is substantially the same as the width of the narrow strip member 13. Each though hole group 41 is comprised of a plurality of radially extending through holes 42 with a rectangular cross-section, which are spaced from each other in the axial direction by a constant distance. Reference numeral 43 denotes a plurality of retainer bars each extending in the axial direction with both ends extended through respective slits 40 formed in the support discs 16. The number of the retainer bars 43 is the same as the number of the through hole groups 41. These retainer bars 43 are spaced from each other (and from the through hole groups 41) by a constant distance in the circumferential direction. Each retainer bar 43 is comprised of a main body portion 43a in the form of rectangular column, as well as a plurality of projections 43b projecting radially outwards from the outer surface of the main body portion 43a. The number of the projections 43b is the same as the number of the through holes 42. The projections 43b are spaced from each other by a constant distance in the axial direction, similarly to the through holes 42, and have a cross-section which corresponds to that of the through holes 42.

The retainer bars 43 are associated with the respective through hole groups 41 such that the projections 43b are inserted into the through holes 42 from one radially inner side. Here, when the retainer bars 43 have been moved to their radially outermost positions, the radially outer surfaces of the projections 43b are flush with the outer periphery of the outer cylinder 17. On the other hand, when the retainer bars 43 are moved radially inwards, the radially outer surfaces of the projections 43b are retracted radially inwards from the outer periphery of the outer cylinder 17 while being guided by guide members 44.

Similarly to the retainer plate 31, the radially outer surface of each projection 43b is in the form of a mirror-finished surface formed by plating. As a result, when the sheet member 12 is urged against the radially outer surfaces of the projections 43b, the sheet member 12 is brought into tight adhesion with the retainer bars 43 by intensive adhesion force. On the other hand, the outer peripheral surface of the outer cylinder 17 is coated by a coating layer comprised of low adhesion material, i.e. silicone rubber in the illustrated embodiment, so that the sheet member 12 can be readily separated and removed from the outer cylinder 17.

In this way, beginning from the leading end application region 33 to be applied with the narrow strip member 13 forming the leading end of the sheet member 12, a plurality of application regions to be applied with the respective narrow strip members are arranged on the outer peripheral surface of the transfer drum 11 at a constant pitch in the circumferential direction, which corresponds to the width of the narrow strip members 13. These application regions are divided into high adhesion sections, i.e. those sections which can be moved integrally with the retainer bars 43, and low adhesion sections, i.e. those sections of the outer cylinder 17 which are situated between the retainer bars 43, wherein the high adhesion sections and the low adhesion sections are alternately arranged in the circumferential direction. In the transfer drum 11 excluding the leading end application region 33, the alternate arrangement of the retainer bars 43 (high adhesion sections) and the surface regions of the outer cylinder 17 between the retainer bars 43 which are adjacent to each other in the circumferential direction (low adhesion sections) can be realized easily and at low cost.

Reference numeral 45 denotes a plurality of cylinders (corresponding in number to the retainer bars 43) secured to the support discs 16 to extend in the radial direction, each having a piston rod 46 with a tip end which is connected, via an intermediate member 47, to the relevant axial end of the retainer bar 43. When the cylinder 45 is operated and the piston rod 46 is extended to its stroke end, the retainer bar 43 is moved radially outwards such that the radially outer surface of the projection 43b in the retainer bar 43 is flush with the outer surfaces of the outer cylinder 17. On the other hand, when the piston rod 46 is retracted to its stroke end, the radially outer surface of the projection 43b in the retainer bar 43 is retracted radially inwards from the outer surfaces of the outer cylinder 17. The above-mentioned cylinders 45 and the intermediate members 47 as a whole constitute the moving means 48 for moving the high adhesion sections in the form of the retainer bars 43 radially inwards from the low adhesion sections in the form of the portions of the outer cylinder 17 between the retainer bars 43.

Reference numeral 51 denotes a cylindrical receiver drum which is arranged on one side of the transfer drum 11 so as to be rotatable about a horizontal axis. As mentioned above, the sheet member 12 is transferred from the transfer drum 11 to the outer peripheral surface of the receiver drum 51. On this occasion, the receiver drum 51 is urged by the transfer drum 11 and rotated in opposite direction to the transfer drum 11.

The receiver drum 51 in its outer peripheral surface includes a leading end application region 52 to which the leading end of the sheet member 12 is applied. The leading end application region 52 is provided with a rubber band 53 having an outer surface in the form of a mirror-finished surface. Provision of the rubber band 53 having a mirror-finished outer surface at the leading end application region 52 of the receiver drum 51 ensures that the leading end of the sheet member 12 can be easily and positively transferred from the transfer drum 11 to the receiver drum 51.

Reference numeral 54 denotes a vacuum member arranged on the radially inner side of the rubber band 53. A vacuum chamber 55 is formed between the vacuum member 54 and the rubber band 53, which is connected to a vacuum source, not shown. The rubber band 53 is formed with a plurality of vacuum passages extending therethrough and communicated with the vacuum chamber 55. Such arrangement ensures that, upon transfer of the leading end of the sheet member 12 from the transfer drum 11 to the receiver drum 51, the leading end of the sheet member 12 is sucked by vacuum through the vacuum passages 56 to positively transfer the leading end.

The operation of the transfer device according to the basic concept of the present invention will be described below. It is assumed that the transfer drum is waiting at the sheet member forming position. In this instance, the piston rods 36, 46 of the cylinders 35, 45 are extended to their stroke ends so that the high adhesion sections formed by the radially outer surfaces of the retainer plates 31 and the retainer bars 43 (projections 43b) are flush with the low adhesion sections formed by the outer surfaces of the interpolating bars 23 and the outer peripheral surfaces of the outer cylinder 17.

When the first narrow strip member 13 forming the leading end of the sheet member 12 is supplied to the transfer drum 11 and urged against the leading end application region 33, the narrow strip member 13 (the leading end of the sheet member 12) is intensively adhered to the high adhesion sections. Here, the high adhesion sections (the retainer plates 31) and the low adhesion sections formed by the interpolating bars 23 in the leading end application region 33 are not limited to an arrangement wherein they are smaller in surface area than the sheet member 12, as in the conventional suction holes. Thus, the high adhesion sections and the low adhesion sections can be made larger in surface area than the sheet member 12 so as to ensure that the leading end of the sheet member 12 is positively held in place, over the entire regions, particularly by the adhesion force of the high adhesion sections in the form of the retainer plates 31, without causing deformation.

Subsequently, after the transfer drum 11 has been rotated by an amount corresponding to the width of the narrow strip member 13, a new narrow strip member 13 is applied to the application region of the transfer drum 11 corresponding to the new narrow strip member 13, so as to extend in the axial direction with its side edge in tight contact with the corresponding side edge of the previous narrow strip member 13. Such step is repeated multiple times, the number of which corresponds to the nominal rim diameter of the product tire minus one, so as to form a sheet member 12 on the outer peripheral surface of the transfer drum 11. On this occasion, since the projections 43b of the retainer bars 43 as the high adhesion sections are flush with the outer cylinder 17 as the low adhesion sections, the sheet member 12 is intensively adhered to the radially outer surfaces of the projections 43b by adhesion force, so that the sheet member 12 as a whole, which has been applied to the outer peripheral surface of the transfer drum 11, can be positively retained by the transfer drum 11.

On this occasion, furthermore, the projections 43b of the retainer bars 43 are situated at the boundaries between the adjacent narrow strip members 13. When the sheet member 12 is retained by the transfer drum 11 under such condition, as mentioned above, the sheet member 12 is adhesively retained in particular by the high adhesion sections (the retainer plates 31 and the retainer bars 43), so as to prevent formation of suction traces (deformations) over a wide range as in the prior art.

Subsequently, the transfer drum 11 adhesively retaining the sheet member 12 on the high adhesion sections (the retainer plates 31 and the retainer bars 43) is moved toward the receiver drum 51. In this instance, since the sheet member 12 as a whole is intensively retained by the transfer drum 11 as mentioned above, the sheet member 12 is effectively prevented from separation from the transfer drum 11 or dislocation. As soon as the transfer drum has been moved to the transfer position and brought into contact with the receiver drum 51, the leading end of the sheet member 12 is urged by the transfer drum 11 against the leading end application region 52 of the receiver drum 51.

On this occasion, the cylinders 35 are operated so that the piston rods 36 are retracted to their stroke ends, so that the high adhesion sections in the form of the radially outer surfaces of the retainer plates 31 are moved radially inwards from the outer peripheries of the interpolating bars 23. By this, the leading end of the sheet member 12 is now retained solely by the low adhesion section in the form of the interpolating bars 23. On the other hand, as explained above, the leading end application region 52 of the receiver drum 51 in contact with the transfer drum 12 is formed as a mirror-finished surface. Therefore, the leading end of the sheet member 12 is transferred to the receiver drum 51 which now exhibits stronger adhesion force. At the same time, the vacuum source is operated to apply vacuum to the vacuum chamber 55 and the vacuum passages 56, so that the leading end of the sheet member 12 is attracted by vacuum to the receiver drum 51 to ensure that the transfer of the leading end is positively achieved.

With the transfer drum 11 urged against the receiver drum 51, the transfer drum 11 and the receiver drum 51 are rotated in opposite directions. During the rotation of these drums 11, 51, each time the retainer bars 43 successively reach the line connecting the axes of the drums 11, 51, the relevant retainer bars 43 are successively moved by the cylinders 45 radially inwards from the outer peripheral surface of the outer cylinder 17. As a result, the remaining regions of the sheet member 12 in contact with the transfer drum 11 only at the low adhesion sections (the outer cylinder 17) are readily separated and removed from the transfer drum 11 and successively transferred onto the outer peripheral surface of the receiver drum 51.

Furthermore, upon the above-mentioned transfer, since the low adhesion sections (the interpolating bars 23 and the outer cylinder 17) are formed of a resilient material, in particular silicone rubber, at least in the outer surface portion, even when the distance between the transfer drum 11 and the receiver drum 51 is less than zero, the sheet member 12 can be transferred from the transfer drum 11 to the receiver drum 51 under resilient deformation of the outer surface portion (silicone rubber) of the interpolating bars 23 and the outer cylinder 17, to thereby facilitate the adjustment of the distance between these drums. After the entirety of the sheet member 12 has been transferred from the transfer drum 11 onto the receiver drum 51, the rotation of the transfer drum 11 and the receiver drum 51 is stopped.

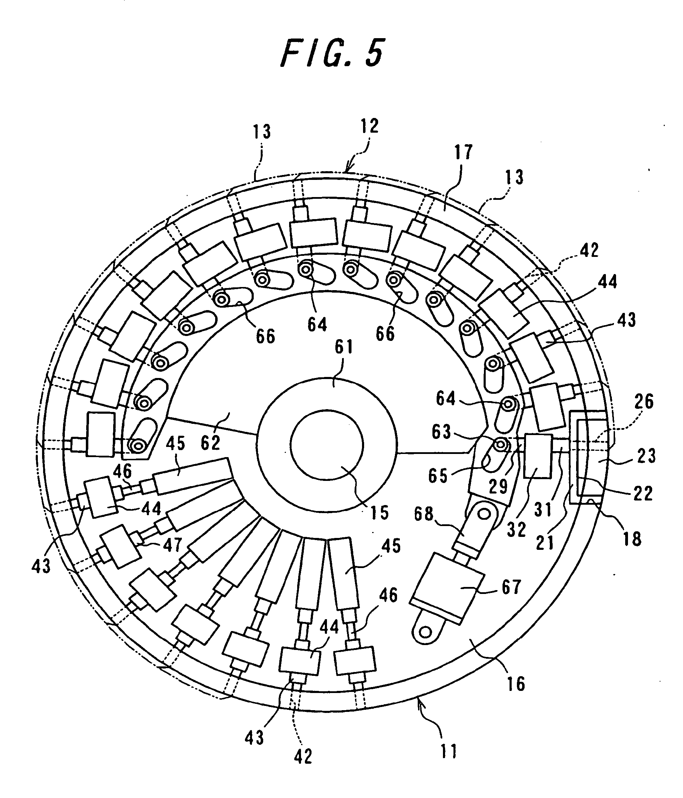

The basic concept of the present invention has been described above with reference to an embodiment wherein the moving means 38, 48 for moving the high adhesion sections (the retainer bars 43) in each adhesion region radially inwards are comprised of cylinders 35, 45 provided for the respective high adhesion sections. It would be desirable if the cylinders corresponding in number to the application regions are not required and the transfer device can be further simplified in structure. The present invention further provides a further embodiment of the sheet member transfer device with a simplified structure, which will be explained below with reference to FIG. 5.

In FIG. 5, reference numeral 62 denotes a rotary cam which is rotatably supported, through a bearing 61, by the main shaft 15. The rotary cam 62 is coaxial to the main shaft 15 and is of substantially sector shape. Reference numeral 63 denotes cam followers each pivoted to the radially inner end of the above-mentioned support bar 29, and reference numeral 64 denotes cam followers each pivoted to the radially inner end of the retainer bar 43 that is situated between the support bar 29 and the retainer bar 43 which, in turn, is spaced from the support bar 29 on the rotational rear side by a predetermined number. The cam followers 63 and 64 provided for the support bars 29 and the retainer bars 43 make it possible to eliminate the cylinders 35, 45 as in the previously explained basic embodiment, so as to simplify the structure of the transfer device as a whole.

Here, the above-mentioned given number is a number (e.g. 14) which corresponds to the nominal value (15) of the minimum rim diameter (e.g., 38 cm, 15 inches) for the pneumatic tire to be formed from the sheet member 12, minus a small integer, i.e. 1 in the illustrated embodiment. The rotary cam 62 has a radially outer edge which is formed with cam holes 65, 66 to be inserted by the cam followers 63, 64, which cam holes are spaced in the circumferential direction from each other, by the same distance as the distance between the cam followers 63, 63 and the cam followers 64, 64. These cam holes 65, 66 are inclined toward the front side in the rotational direction and radially inwards. As a result, when the rotary cam 62 is rotated forwards in the rotational direction, the cam followers 63, 64 are moved radially outwards so that the retainer plates 31 and the retainer bars 43 are flush with the outer peripheral surface of the outer cylinder 17. On the other hand, when the rotary cam 62 is rotated rearwards in the rotational direction, the cam followers 63, 64 are moved radially inwards so that the retainer plates 31 and the retainer bars 43 are retracted from the outer peripheral surface of the outer cylinder 17.

Reference numeral 67 denotes cylinders each having a cylinder head connected to the relevant support disc 16, and a piston rod 68 of which the tip end is connected to the front end of the rotary cam as seen in the rotational direction. As a result, when the cylinder 67 is operated and the piston rod 68 is retracted, the rotary cam 62 is rotated forwards in the rotational direction. On the other hand, when the piston rod 68 is extended, the rotary cam 62 is rotated rearwards in the rotational direction. Other elements of the further embodiment are essentially the same as those in the basic embodiment.

When the transfer drum 11 is applied to form a sheet member 12 for a pneumatic tire of which the nominal rim diameter is 46 cm (18 inches), for example, as explained with reference to the basic embodiment, eighteen narrow strip members 13 are successively applied to the outer peripheral surface of the transfer drum 11 while intermittently rotating the transfer drum 11 by an amount corresponding to the width of the narrow strip member 13.

Then, the transfer drum 11 is moved toward the receiver drum 51 until they are brought into contact with each other, and the leading end of the sheet member 12 is urged against, and transferred onto the leading end application region 52 of the receiver drum 51. The piston rod 68 of the cylinder 67 is extended to rotate the roatry cam 62 rearwards in the rotational direction, so that the retainer plate 31 and the retainer bars 43 are moved radially inwards from the interpolating bars 23 and the outer cylinder 17. As a result, the sheet member 12 is adhesively retained with its leading end, the trailing end precisely positioned by the receiver drum 51 and five retainer bars 43 (the high adhesion sections). However, the remaining center portion is only in contact with the low adhesion sections in the form of the outer cylinder 17 and may thus undergo a slight displacement.

Subsequently, the transfer drum 11 and the receiver drum 51 are rotated in the opposite directions so that the sheet member 12 is progressively transferred from the transfer drum 11 to the receiver drum 51. On this occasion, since the center portion is only in contact with the outer cylinder 17, even if an external force is applied to the sheet member 12, the sheet member 12 is displaced to absorb the external force, without causing wrinkles or entrapment of air. After the leading end of the sheet member 12 has reached the receiver drum 51, each time the retainer bars 43 successively reach the line connecting the axes of the drums 11, 51, the relevant retainer bars 43 are successively moved by the cylinders 45 radially inwards from the outer peripheral surface of the outer cylinder 17. As a result, the remaining regions of the sheet member 12 are successively transferred to the receiver drum 51. Other functions of the further embodiment are essentially the same as those in the basic embodiment.

In the embodiments described above, silicone rubber has been used to form the low adhesion sections. However, according to the present invention, if a resilient deformability is not required for the low adhesion sections, there may be used other materials such as plastic materials. Furthermore, in the embodiments described above, the high adhesion sections are formed as mirror-finished surfaces obtained by plating. However, according to the present invention, the mirror-finished surfaces may be formed by high precision polishing or the like. Moreover, in the embodiments described above, the retainer plate 31 and a plurality of the retainer bars 43 (thirteen in number) are radially moved by the rotary cam 62 integrally. However, according to the present invention, the arrangement may be such that the retainer plate is moved by a cylinder independently of the retainer bars, and the plurality of retainer bars are radially moved by the rotary cam integrally.

In the above description, the cam followers 63, 64, the rotary cam 62 and the cylinder 67 as the cam drive means for rotating the rotary cam in the circumferential direction of the transfer drum, as a whole, constitute the collective radial expansion/contraction means for radially inwardly moving the high adhesion sections corresponding to the leading end application region and the adjacent application regions. Furthermore, the collective radial expansion/contraction means and the cylinder 45 as the moving means for radially inwardly moving the individual high adhesion sections corresponding to the application region for applying the trailing end of the sheet member 12, as a whole, constitute the radial expansion/contraction means for moving the adhesion sections at the entire application regions. Such arrangement of the radial expansion/contraction means makes it possible to realize a simple structure of the transfer device, which serves to positively retain the narrow strip members 13 upon their application, and allows the sheet member 12 to be transferred without dislocations by positively retaining at least the leading end and the trailing end.

The present invention can be generally applied to industrial fields involving a transfer device wherein a sheet member is transferred from a transfer drum onto a receiver drum.

## Claims

1. A sheet member transfer device for forming a cylindrical tire constitutive member by joining a leading end and a trailing end of a sheet member (12) with each other, wherein the sheet member is formed by successively joining side edges of a plurality of narrow strip members (13) with each other, said strip members having a constant width, said sheet member transfer device comprising:
a transfer drum (11) for forming the sheet member (12) by applying said plurality of strip members (13) onto an outer peripheral surface of the transfer drum so that the width direction of each strip member is oriented in the circumferential direction of the transfer drum, and a receiver drum (51) for forming the cylindrical tire constitutive member by joining the leading end and the trailing end of the sheet member which has been transferred from the transfer drum, with said transfer drum urged against the receiver drum and said receiver drum rotated in an opposite direction to the transfer drum;
said transfer drum (11) being provided, on its outer peripheral surface, with a leading end application region (33) for applying a strip member (13) forming said leading end of the sheet member (12), and a plurality of application regions following said leading end application region and arranged in the circumferential direction of the transfer drum at a pitch which corresponds to the width of the strip member, said application regions being divided into a plurality of low adhesion sections with a low adhesion force, and a plurality of high adhesion sections with a high adhesion force, said low adhesion sections and said high adhesion sections being alternately arranged in the width direction of the transfer drum, and
radial expansion/contraction means for moving the high adhesion sections radially inwards of the low adhesion sections, said high adhesion sections and low adhesion sections being flush with each other when the narrow strip members are applied to the transfer drum, and said high adhesion sections being moved by said radial expansion/contraction means radially inwards of the low adhesion sections, when the sheet member is transferred from the transfer drum to the receiver drum

2. A sheet member transfer device as claimed in claim 1, wherein:
said radial expansion/contraction means comprises collective expansion/ contraction means (62, 63, 67) for moving radially inwards the high adhesion sections in the leading end application region and the application region adjacent thereto, respectively, and moving means (45) for individually moving radially inwards the high adhesion sections in the remaining application regions; and
wherein said collective expansion/contraction means comprises: cam followers (63) which are pivoted to the high adhesion sections, respectively, and movable radially inwards and outwards; a rotary cam (62) which can be rotated to move the cam followers radially inwards and outwards; and cam driving means (67) for rotating the rotary cam in the circumferential direction of the transfer drum.

3. A sheet member transfer device as claimed in claim 1 or 2, wherein the low adhesion sections in at least the leading end application region are comprised of resilient material.

4. A sheet member transfer device as claimed in any of claims 1 to 3, wherein the low adhesion sections in at least the leading end application region are comprised of silicone rubber at least in outer surface regions thereof.

5. A sheet member transfer device as claimed in any of claims 1 to 4, wherein the high adhesion sections in at least the leading end application region have outer surfaces in the form of mirror-finished surfaces.

6. A sheet member transfer device as claimed in claim 5, wherein the mirror-finished surfaces are formed by plating with respect to the outer surfaces.

7. A sheet member transfer device as claimed in any of claims 1 to 6, wherein the low adhesion sections and the high adhesion sections in at least the leading end application region are arranged alternately in the axial direction.

## Patentansprüche

1. Bahnelement-Übertragungsvorrichtung zum Formen eines zylindrischen Reifenbestandteils durch Verbinden eines vorderen Endes und eines hinteren Endes eines Bahnelements (12) miteinander, wobei das Bahnelement geformt ist durch aufeinanderfolgendes Verbinden von Seitenkanten mehrerer schmaler Streifenelemente (13) miteinander, wobei die Streifenelemente eine gleichbleibende Breite haben, wobei die Bahnelement-Übertragungsvorrichtung Folgendes umfasst:
eine Übertragungstrommel (11) zum Formen des Bahnelements (12) durch Aufbringen der mehreren Streifenelemente (13) auf eine Außenumfangsfläche der Übemagungstrommel, so dass die Breitenrichtung jedes Streifenelementes in der Umfangsrichtung der Übertragungstrommel ausgerichtet ist, und eine Empfängertrommel (51) zum Formen des zylindrischen Reifenbestandteils durch Verbinden des vorderen Endes und des hinteren Endes des Bahnelementes, das von der Übertragungstrommel übertragen worden ist, wobei die Übertragungstrommel gegen die Empfängertrommel gedrückt wird und die Empfängertrommel in einer entgegengesetzten Richtung zu der Übertragungstrommel gedreht wird,
wobei die Übernagungstrommel (11), an ihrer Außenumfangsfläche, mit einem Vorderende-Aufbringungsbereich (33) zum Aufbringen eines Streifenelementes (13), welches das vordere Ende des Bahnelementes (12) bildet, und mehreren Aufbringungsbereichen, die sich an den Vorderende-Aufbringungsbereich anschließen und in der Umfangsrichtung der Übertragungstrommel mit einer Teilung, die der Breite des Streifenelementes entspricht, angeordnet sind, versehen ist, wobei die Aufbringungsbereiche in mehrere niedrig haftende Sektionen mit einer niedrigen Adhäsionskraft und mehrere hoch haftende Sektionen mit einer hohen Adhäsionskraft geteilt sind, wobei die niedrig haftenden Sektionen und die hoch haftenden Sektionen abwechselnd in der Breitenrichtung der Übertragungstrommel angeordnet sind, und
radiale Expansions-/Kontraktionsmittel, um die hoch haftenden Sektionen von den niedrig haftenden Sektionen aus in radialer Richtung nach innen zu bewegen, wobei die hoch haftenden Sektionen und die niedrig haftenden Sektionen bündig miteinander sind, wenn die schmalen Streifenelemente auf die Übertragungstrommel aufgebracht werden, und die hoch haftenden Sektionen durch die radialen Expansions-/Kontraktionsmittel von den niedrig haftenden Sektionen aus in radialer Richtung nach innen bewegt werden, wenn das Bahnelement von der Übertragungstrommel zu der Empfängertrommel übertragen wird.

2. Bahnelement-Übertragungsvorrichtung nach Anspruch 1, wobei:
die radialen Expansions-/Kontraktionsmittel gemeinsame Expansions-/Kontraktionsmittel (62, 63, 67), um die hoch haftenden Sektionen in dem Vorderende-Aufbringungsbereich bzw. dem daran angrenzenden Aufbringungsbereich in Radialrichtung nach innen zu bewegen, und Bewegungsmittel (45), um die hoch haftenden Sektionen in den verbleibenden Aufbringungsbereichen einzeln in Radialrichtung nach innen zu bewegen, umfassen; und
wobei die gemeinsamen Expansions-/Kontraktionsmittel Folgendes umfassen: Nockenstößel (63), die jeweils an den hoch haftenden Sektionen aufgehängt sind und in Radialrichtung nach innen und nach außen bewegt werden können, einen Drehnocken (62), der gedreht werden kann, um die Nockenstößel in Radialrichtung nach innen und nach außen zu bewegen, und Nockenantriebsmittel (67), um den Drehnocken in der Umfangsrichtung der Übertragungstrommel zu drehen.

3. Bahnelement-Übertragungsvorrichtung nach Anspruch 1 oder 2, wobei die niedrig haftenden Sektionen in wenigstens dem Vorderende-Aufbringungsbereich aus einem elastischen Material bestehen.

4. Bahnelement-Übertragungsvorrichtung nach einem der Ansprüche 1 bis 3, wobei die niedrig haftenden Sektionen in wenigstens dem Vorderende-Aufbringungsbereich wenigstens in Außenflächenbereichen derselben aus Silikonkautschuk bestehen.

5. Bahnelement-Übertragungsvorrichtung nach einem der Ansprüche 1 bis 4, wobei die hoch haftenden Sektionen in wenigstens dem Vorderende-Aufbringungsbereich Außenflächen in der Form von hochglanzpolierten Oberflächen haben.

6. Bahnelement-Übernagungsvorrichtung nach Anspruch 5, wobei die hochglanzpolierten Oberflächen durch Plattieren in Bezug auf die Außenflächen geformt sind.

7. Bahnelement-Übertragungsvorrichtung nach einem der Ansprüche 1 bis 6, wobei die niedrig haftenden Sektionen und die hoch haftenden Sektionen in wenigstens dem Vorderende-Aufbringungsbereich in der Axialrichtung abwechselnd angeordnet sind.

## Revendications

1. Dispositif de transfert d'un élément en forme de feuille pour former un élément constitutif cylindrique d'un bandage pneumatique en reliant une extrémité avant et une extrémité arrière d'un élément en forme de feuille (12), l'élément en forme de feuille étant formé en reliant successivement des bords latéraux de plusieurs éléments de bande étroits (13), lesdits éléments de bande ayant une largeur constante, ledit dispositif de transfert de l'élément en forme de feuille comprenant :
un tambour de transfert (11) pour former l'élément en forme de feuille (12) en appliquant lesdits plusieurs éléments de bande (13) sur une surface périphérique externe du tambour de transfert, de sorte que la direction de la largeur de chaque élément de bande est orientée dans la direction circonférentielle du tambour de transfert, et un tambour de réception (51) pour former l'élément constitutif cylindrique du bandage pneuamtique en reliant l'extrémité avant et l'extrémité arrière de l'élément en forme de feuille ayant été transféré à partir du tambour de transfert, ledit tambour de transfert étant poussé contre le tambour de réception et ledit tambour de réception étant tourné dans une direction opposée à celle du tambour de transfert ;
ledit tambour de transfert (11) comportant sur sa surface périphérique externe une région d'application de l'extrémité avant (33) pour appliquer un élément de bande (13) formant ladite extrémité avant de l'élément en forme de feuille (12), et plusieurs régions d'application suivant ladite région d'application de l'extrémité avant et agencées dans la direction circonférentielle du tambour de transfert à un pas qui correspond à la largeur de l'élément de bande, lesdites régions d'application étant divisées en plusieurs sections à adhésion réduite, présentant une force d'adhésion réduite, et plusieurs sections à adhésion élevée, présentant une force d'adhésion élevée, lesdites sections à adhésion réduite et lesdites sections à adhésion élevée étant agencées de manière alternée dans la direction de la largeur du tambour de transfert, et
un moyen à dilatation/contraction radiale pour déplacer les sections à adhésion élevée radialement vers l'intérieur des sections à adhésion réduite, lesdites sections à adhésion élevée et lesdites sections à adhésion réduite s'affleurant les unes les autres lorsque les éléments de bande étroits sont appliqués sur le tambour de transfert, et lesdites sections à adhésion élevée étant déplacées radialement vers l'intérieur des sections à adhésion réduite par ledit moyen à dilatation/contraction radiale lorsque l'élément en forme de feuille est transféré du tambour de transfert vers le tambour de réception.

2. Dispositif de transfert d'un élément en forme de feuille selon la revendication 1, dans lequel :
ledit moyen à dilatation/contraction radiale comprend un moyen à dilatation/contraction collectif (62, 63, 67) pour déplacer respectivement les sections à adhésion élevée radialement vers l'intérieur dans la région d'application de l'extrémité avant et la région d'application adjacente, et un moyen de déplacement (45) pour déplacer individuellement les sections à adhésion élevée radialement vers l'intérieur dans les régions d'application restantes ; et
dans lequel ledit moyen de dilatation/de contraction collectif comprend : des galets de came (63), pivotés respectivement vers les sections à adhésion élevée et pouvant être déplacés radialement vers l'intérieur et vers l'extérieur ; une came rotative (62), pouvant être tournée pour déplacer les galets de came radialement vers l'intérieur et vers l'extérieur ; et un moyen d'entraînement de la came (67) pour faire tourner la came rotative dans la direction circonférentielle du tambour de transfert.

3. Dispositif de transfert d'un élément en forme de feuille selon la revendication 1 ou 2, dans lequel les sections à adhésion réduite dans au moins la région d'application de l'extrémité avant sont composées d'un matériau élastique.

4. Dispositif de transfert d'un élément en forme de feuille selon l'une quelconque des revendications 1 à 3, dans lequel les sections à adhésion réduite dans au moins la région d'application de l'extrémité avant sont composées de caoutchouc silicone, au moins dans leurs régions de surface externe.

5. Dispositif de transfert d'un élément en forme de feuille selon l'une quelconque des revendications 1 à 4, dans lequel les sections à adhésion élevée dans au moins la région d'application de l'extrémité avant comportent des surfaces externes sous forme de surfaces à poli spéculaire.

6. Dispositif de transfert d'un élément en forme de feuille selon la revendication 5, dans lequel les surfaces à poli spéculaire sont formées par placage des surfaces externes.

7. Dispositif de transfert d'un élément en forme de feuille selon l'une quelconque des revendications 1 à 6, dans lequel les sections à adhésion réduite et les sections à adhésion élevée dans au moins la région d'application de l'extrémité avant sont agencées de manière alternée dans la direction axiale.
